# EUROPÄISCHE PATENTSCHRIFT

(11) **EP 1 516 539 B1**
(45) Veröffentlichungstag und Bekanntmachung des Hinweises auf die Patenterteilung: **06.12.2006**
(21) Anmeldenummer: 04405474.0
(22) Anmeldetag: 23.07.2004
(51) Int. Cl.: A23G 9/28, A47J 9/00

(54) **Eiskremportionierer**
Ice cream scoop
Cuillère à glace

(30) Priorität: 28.07.2003 US 627704
(43) Veröffentlichungstag der Anmeldung: 23.03.2005
(73) Patentinhaber: MOHA MODERNE HAUSHALTWAREN AG, CH-3052 Zollikofen (CH); Horng, Ruey-Lan, Yeong Kang City, Tainan Hsien (TW)
(72) Erfinder: Horng, Ruey-Lan, Yeong Kang City, Tainan Hsien (TW)
(74) Vertreter: Schneider Feldmann AG Patent- und Markenanwälte

(56) Entgegenhaltungen:
- DE-A- 2 743 308
- US-A- 1 485 622
- US-A- 2 191 524
- US-A- 2 444 486
- US-A- 4 392 806
- US-A- 6 162 039

## Beschreibung

Die vorliegende Erfindung betrifft einen Eiskremportionierer.

Ein herkömmlicher Eiskremportionierer schliesst zwei Griffe ein, die drehbar um einen Stift verbunden sind, wobei eine Feder zwischen den Griffen angefügt ist zum Ausrichten der Griffe voneinander weg. Jeder Griff schliesst ein viertelkugelförmiges Schälchen ein, das an einem Ende desselben gebildet ist. Die viertelkugelförmigen Schälchen bilden zusammen ein halbkugelförmiges Schälchen zum Portionieren von Eiskrem in einen Behälter. Wenn die Griffe zusammengedrückt werden, bewegen sich die viertelkugelförmigen Schälchen voneinander weg und geben somit die Eiskrem aus dem viertelkugelförmigen Schälchen ab. Jedoch ist gefunden worden, dass die Eiskrem erfolgreich abgegeben werden könnte, wenn der Portionierer in einer horizontalen Richtung liegt, da die Eiskrem auf gewisse Weise klebrig ist. Aus der US-4392806 ist ein Eiskremportionierer bekannt, bei dem ein Teil des halbkugelförmigen Schälchens über einem Hebel angehoben werden kann. Eine Aufgabe der vorliegenden Erfindung besteht darin, einen Eiskremportionierer zum verlässlichen Abgeben von Eiskrem bereitzustellen.

In den Zeichnungen ist:
Fig. 1 eine perspektivische Explosionsansicht eines Eiskremportionierers gemäss der vorliegenden Erfindung,
Fig. 2 eine perspektivische Ansicht des Eiskremportionierers gemäss der vorliegenden Erfindung,
Fig. 3 eine Schnittansicht des Eiskremportionierers gemäss der vorliegenden Erfindung in einem Zustand zum Portionieren von Eiskrem,
Fig. 4 eine Schnittansicht ähnlich zu Fig. 3, in welcher der Eiskremportionierer in einem Zustand zum Abgeben von Eiskrem ist,
Fig. 5 eine Schnittansicht ähnlich zu Fig. 3, welche ein Portionieren von Eiskrem veranschaulicht,
Fig. 6 eine Schnittansicht ähnlich zu Fig. 4, welche eine Abgabe von Eiskrem veranschaulicht.

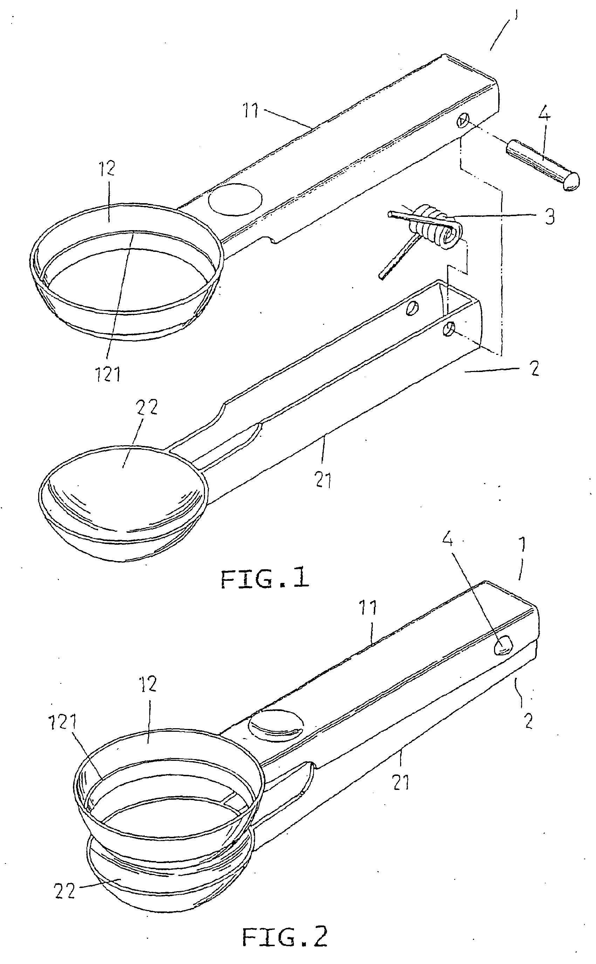

Sich beziehend auf Figs. 1 und 2 umfasst ein Eiskremportionierer gemäss der vorliegenden Erfindung im allgemeinen ein erstes Portionierbauteil 1 und ein zweites Portionierbauteil 2. Das erste Portionierbauteil 1 schliesst einen Griff 11 und einen Ring 12 ein, der an einem Ende des Griffs 11 gebildet ist. Der Ring 12 schliesst einen abgestuften Bereich 121 in einer inneren Peripherie desselben ein. Das zweite Portionierbauteil 2 schliesst einen Griff 21 und ein Schälchen 22 ein, das an einem Ende des Griffs 21 gebildet ist.

Das andere Ende des Griffs 11 des ersten Portionierbauteils 1 und das andere Ende des Griffs des zweiten Portionierbauteils 2 sind über einen Stift 4 drehbar miteinander verbunden. Ein elastisches Element 3 ist zwischen dem anderen Ende des Griffs 11 des ersten Portionierbauteils 1 und dem anderen Ende des Griffs des zweiten Portionierbauteils 2 zum Ausrichten des Rings 12 des ersten Portionierbauteils 1 und des Schälchens 22 des zweiten Portionierbauteils 2 voneinander weg angefügt.

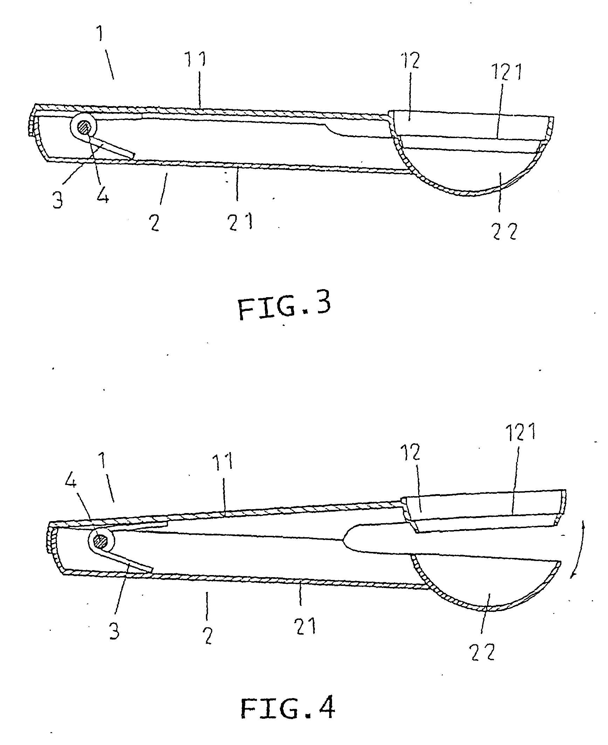

Fig. 3 ist eine Schnittansicht des Eiskremportionierers in einem Zustand zum Portionieren von Eiskrem. Fig. 4 ist eine Schnittansicht ähnlich zu Fig. 3, bei welcher der Eiskremportionierer in einem Zustand zum Abgeben von Eiskrem ist. Wie veranschaulicht in Fig. 3, ist der Ring 12 des ersten Portionierbauteils 1 zumindest teilweise in dem Schälchen 22 des zweiten Portionierbauteils 2 aufgenommen, wenn er in der portionierenden Position ist, und bildet einen Portionierer zum Portionieren. Insbesondere ruht der Ring 12 des ersten Portionierbauteils 1 an dem oberen Ende des Schälchens 22 des zweiten Portionierbauteils 2, wenn er in einem Zustand zum Portionieren ist, mit einer äusseren Peripherie des abgestuften Bereichs 121 des Rings 12 in Kontakt mit einer äusseren Peripherie des Schälchens 22.

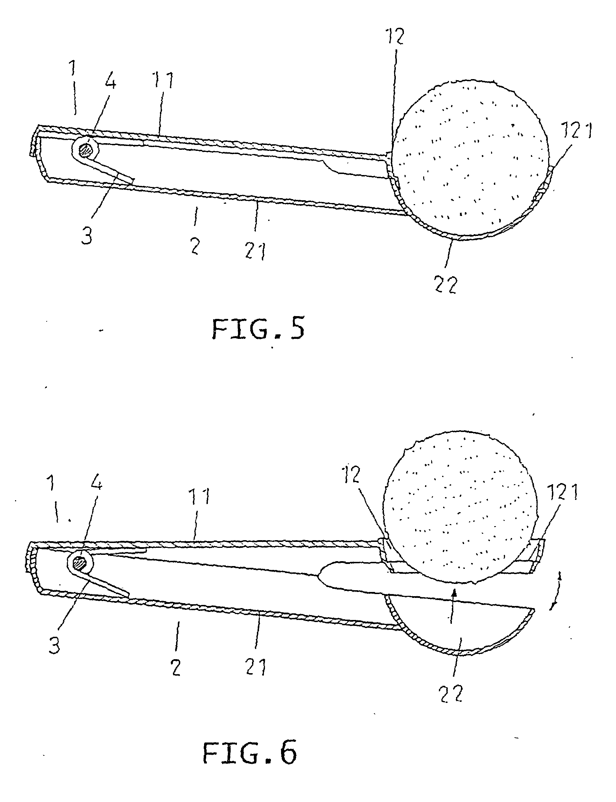

Sich beziehend auf Fig. 5, wenn Eiskrem portioniert wird, werden die Griffe 11 und 21 zusammengedrückt durch eine Hand des Verwenders. Wenn die Druckkraft freigegeben wird, kehrt das elastische Element 3 in seine ursprüngliche Position zurück, was den Ring 12 des ersten Portionierbauteils 1 und das Schälchen 22 des zweiten Portionierbauteils 2 voneinander wegbewegt, wie gezeigt in Fig. 6. Die Eiskrem kann somit leicht abgegeben werden, da die Eiskrem lediglich in Kontakt ist mit einem kleinen Bereich einer inneren Peripherie des Rings 12. Insbesondere verlässt die Eiskrem das Schälchen 22 und ist somit weniger klebrig an dem Eiskremportionierer.

Der abgestufte Bereich 121 des Rings 12 des ersten Portionierbauteils 1 verstärkt den Ring 12 und ermöglicht somit ein Portionieren von harter Eiskrem ohne das Risiko einer Deformation des Rings 12.

Die in der vorstehenden Beschreibung, in den Zeichnungen sowie in den Ansprüchen offenbarten Merkmale der Erfindung können sowohl einzeln als auch in jeder beliebigen Kombination zur Verwirklichung der Erfindung in ihren verschiedenen Ausführungsformen wesentlich sein.

## Patentansprüche

1. Eiskremportionierer, welcher umfasst:
ein erstes Portionierbauteil (1), welches einen Griff (11) mit einem ersten Ende und einem zweiten Ende einschliesst, wobei ein Ring (12) an dem ersten Ende des Griffs des ersten Portionierbauteils gebildet ist;
ein zweites Portionierbauteil (2), welches einen Griff (21) mit einem ersten Ende und einem zweiten Ende einschliesst, wobei ein Schälchen(22) an dem ersten Ende des Griffs des zweiten Portionierbauteils gebildet ist;
wobei das zweite Ende des Griffs (11) des ersten Portionierbauteils (1) und das zweite Ende des Griffs (21) des zweiten Portionierbauteils (2) drehbar miteinander verbunden sind;
der Ring (12) des ersten Portionierbauteils (1) mit dem Schälchen (22) des zweiten Portionierbauteils (2) in Eingriff bringbar ist, um einen Portionierer zum Portionieren von Eiskrem zu bilden;
wobei ein elastisches Element (3) zwischen dem zweiten Ende des Griffs (11) des ersten Portionierbauteils (1) und dem zweiten Ende des Griffs (21) des zweiten Portionierbauteils (23) zum Ausrichten des Rings des ersten Portionierbauteils und des Schälchens des zweiten Portionierbauteils voneinander weg zum Ausgeben von Eiskrem angefügt ist.

2. Eiskremportionierer nach Anspruch 1, bei welchem der Ring (12) des ersten Portionierbauteils (1) zumindest teilweise entfernbar in dem Schälchen (22) des zweiten Portionierbauteils (2) aufgenommen ist.

3. Eiskremportionierer nach Anspruch 1, bei welchem der Ring (12) einen abgestuften Bereich (121) in einer inneren Peripherie desselben einschliesst, wobei der Ring (12) des ersten Portionierbauteils (21) an dem oberen Ende des Schälchens (22) des zweiten Portionierbauteils (2) ruht, wenn er in einem Zustand des Portionierens ist, mit einer äusseren Peripherie des abgestuften Bereichs (121) des Rings (12) in Kontakt mit einer äusseren Peripherie des Schälchens (22).

## Claims

1. An ice-cream scoop, which comprises
a first scoop component (1) which includes a grip (11) with a first end and with a second end, wherein a ring (12) is formed on the first end of the grip of the first scoop component;
a second scoop component (2) which includes a grip (21) with a first end and with a second end, wherein a scoop shell (22) is formed on the first end of the grip of the second scoop component;
wherein the second end of the grip (11) of the first scoop component (1), and the second end of the grip (21) of the second scoop component (2) are rotatably connected to one another;
the ring (22) of the first scoop component (1) may be brought into engagement with the scoop shell (22) of the second scoop component (2), in order to form a scooper for scooping ice cream;
wherein an elastic element (3) is adjoined between the second end of the grip (11) of the first scoop component (1) and the second end of the grip (21) of the second scoop component (2) for directing the ring of the first scoop component, and the scoop shell of the second scoop component away from one another, for dispensing ice-cream

2. An ice-cream scoop according to claim 1, with which the ring (12) of the first scoop component (1) is accommodated in the scoop shell (22) of the second scoop component (22) in an at least partly removable manner.

3. An ice-cream scoop according to claim 1, with which the ring (12) includes a stepped region (121) in an inner periphery of this, wherein the ring (12) of the first scoop component (21) rests on the upper end of the scoop shell (22) of the second scoop component (2) when it is in the condition of scooping, with an outer periphery of the stepped region (121) of the ring (12) in contact with an outer periphery of the scoop shell (22).

## Revendications

1. Distributeur de portions pour crème glacée qui comprend:
un premier élément constitutif du distributeur de portions (1) qui inclut une poignée (11) avec une première extrémité et une deuxième extrémité, auquel cas un anneau (12) est façonné au niveau de la première extrémité de la poignée du premier élément constitutif du distributeur de portions;
un deuxième élément constitutif du distributeur de portions (2) qui inclut une poignée (21) avec une première extrémité et une deuxième extrémité, auquel cas une coupelle (22) est façonné au niveau de la première extrémité de la poignée du deuxième élément constitutif du distributeur de portions;
auquel cas la deuxième extrémité de la poignée (11) du premier élément constitutif du distributeur de portions (1) et la deuxième extrémité de la poignée (21) du deuxième élément constitutif du distributeur de portions (2) sont reliées ensemble de sorte à être mobile;
l'anneau (12) du premier élément constitutif du distributeur de portions (1) est susceptible d'être amené en prise avec la coupelle (22) du deuxième élément constitutif du distributeur de portions (2) pour former un distributeur de portions pour portionner de la crème glacée;
auquel cas un élément élastique (3) est ajouté entre la deuxième extrémité de la poignée (11) du premier élément constitutif du distributeur de portions (1) et la deuxième extrémité de la poignée (21) du deuxième élément constitutif du distributeur de portions (23) pour l'orientation de l'anneau du premier élément constitutif du distributeur de portions et de la coupelle du deuxième élément constitutif du distributeur de portions en éloignement l'un de l'autre pour la distribution de crème glacée.

2. Distributeur de portions pour crème glacée selon la revendication 1, dans le cas duquel l'anneau (12) du premier élément constitutif du distributeur de portions (1) est logé au moins en partie de façon amovible dans la coupelle (22) du deuxième élément constitutif du distributeur de portions (2).

3. Distributeur de portions pour crème glacée selon la revendication 1, dans le cas duquel l'anneau (12) inclut un secteur étagé (121) dans une périphérie interne de ce même anneau, auquel cas l'anneau (12) du premier élément constitutif du distributeur de portions (21) repose sur l'extrémité supérieure de la coupelle (22) du deuxième élément constitutif du distributeur de portions (2), s'il est dans un état du portionnement avec une périphérie extérieure du secteur étagé (121) de l'anneau (12) en contact avec une périphérie extérieure de la coupelle (22).
